## Europäisches Patentamt
## European Patent Office
## Office européen des brevets

(19)

(11) Veröffentlichungsnummer: **0 001 743**
**B1**

(12) # EUROPÄISCHE PATENTSCHRIFT

(45) Veröffentlichungstag der Patentschrift: **21.10.81**

(51) Int. Cl.³: **G 03 B 27/73**, G 03 D 15/00

(21) Anmeldenummer: **78100870.1**

(22) Anmeldetag: **12.09.78**

(54) Verfahren und Vorrichtung zur Berücksichtigung der Eigenheiten der verschiedenen Filmsorten beim Farbkopieren.

(30) Priorität: **07.11.77 DE 2749721**

(43) Veröffentlichungstag der Anmeldung:
**16.05.79 Patentblatt 79/10**

(45) Bekanntmachung des Hinweises auf die Patenterteilung:
**21.10.81 Patentblatt 81/42**

(84) Benannte Vertragsstaaten:
**BE CH FR GB**

(56) Entgegenhaltungen:
**DE - A - 2 545 214**
**DE - A - 2 545 488**
**DE - A - 2 556 281**
**DE - A - 2 717 309**
**DE - A - 2 803 866**
**DE - B - 1 260 295**
**DE - B - 1 263 486**
**DE - B - 2 532 600**

(73) Patentinhaber: **Agfa-Gevaert AG**
**D-5090 Leverkusen 1 (DE)**

(72) Erfinder: **von Stein, Werner**
**Mispelweg 20**
**D-2000 Hamburg 71 (DE)**
Erfinder: **Fergg, Berthold, Dr.**
**Enzianring 3**
**D-8021 Taufkirchen (DE)**

Courier Press, Leamington Spa, England.

**0 001 743**

## Verfahren und Vorrichtung zur Berücksichtigung der Eigenheiten der verschiedenen Filmsorten beim Farbkopieren

Die Erfindung betrifft ein Verfahren und eine Vorrichtung zur Berücksichtigung der Eigenheiten der verschiedenen Filmsorten beim Farbkopieren, wobei die Belichtungssteuervorrichtung Speicher umfaßt, in denen den Kopiereigenheiten jeder Filmsorte entsprechende Steuerdaten und die Werte eventueller Maskendichten gespeichert sind, wobei für jede Filmsorte auf den zugehörigen Speicher umgeschaltet wird.

Beim Farbkopieren mit einer automatischen Belichtungssteuerung zur Erzielung befriedigender Farbwiedergabe ist eine Anpassung der Belichtungssteuerschaltung an die speziellen Eigenheiten des Aufnahmematerials, wie z.B. Schwarzschildverhalten, spektrales Verhalten von Farbstoffen des Films und eventuelle Masken unbedingt erforderlich. Bei einem bekannten Gerät der geschilderten Art geschieht dies durch sogenannte Eichspeicher, bei denen für jeden Farbkanal Widerstände in eine bestimmte Einstellung gebracht werden und die entweder durch Umschalten oder Auswechseln steckbarer Einheiten jeweils an die Filmsorte angepaßt werden.

Bei einem solchen Gerät muß jedoch jeweils bei Einlaufen einer neuen Filmsorte das Gerät umgeschaltet werden. Bei dem Auftreten von nur einigen wenigen Filmsorten, die noch dazu unterschiedlichen chemischen Entwicklungsprozessen zu unterwerfen sind, bereitete es keine Schwierigkeiten, ein Kopiergerät über längere Zeiträume mit Filmen einer einzigen Sorte zu bedienen. Mit dem Auftreten mehrerer Filmsorten, die noch dazu nach dem gleichen Prozeß zu behandeln sind, gewinnt das Problem der Eineichung der Kopiergeräte auf die jeweils zu kopierenden Filmsorten an Bedeutung.

Aus der DE—B—25 32 600 ist auch eine Belichtungssteuerung bekannt, bei der die Vorlage durch mehrere fotoelektrische Wandler in einem oder mehreren Spektralbereichen an unbelichteten Stellen ausgemessen wird. Ein Funktionsbildner gibt eine vorlagenmaterialspezifische Spannung an eine Vergleichsstufe ab, in der diese Spannung mit einer aufgrund von Erfahrungswerten voreingestellten Spannung verglichen und ein vorlagematerialtypisches Signal abgegeben wird. Danach kann die Zuschaltung des zum jeweiligen Material gehörenden Belichtungsmengenspeichers bewirkt werden. Eine solche Einrichtung ist aber äußerst kompliziert und aufwendig.

Aufgabe der Erfindung ist es daher, ein Verfahren und eine Vorrichtung der eingangs genannten Art derart weiterzubilden, daß die Eichung auf verschiedene Filmsorten vereinfacht ist und sicher erkannt werden kann.

Diese Aufgabe wird gelöst durch die in dem beiliegenden Anspruch 1 beschriebene Erfindung.

Durch die Einbringung der Angaben über die Filmsorten als maschinell lesbarer Code in den Film selbst wird diese Information dem Kopiergerät unmittelbar zugeführt und es ist eine automatische Einstellung des Kopiergerätes auf die jeweiligen Filmeigenschaften möglich.

Bei einer besonders vorteilhaften Ausgestaltung der Erfindung erfolgt dies im Zusammenhang mit dem Zusammenkleben der Filme zu einem langen Band vor dem Entwickeln, wobei ohne Mehraufwand bei der Bearbeitung die Information über die jeweilige Filmsorte unmittelbar in das Klebegerät und dadurch in den Film eingegeben wird.

Weitere Einzelheiten und Vorteile der Erfindung ergeben sich aus den Unteransprüchen im Zusammenhang mit der Beschreibung von Ausführungsbeispielen, die anhand von Figuren erläutert sind. Es zeigen:

Fig. 1 einen Querschnitt durch die erfindungsgemäße Anordnung;

Fig. 2a und 2b verschiedene Formen der Codierung auf dem Film;

Fig. 3 eine schematische Ansicht der Codiereinrichtung an einem Vorlagen-Vorbetrachtungsgerät; und

Fig. 4 eine Schemadarstellung einer auf die am Film angebrachten Codierungen ansprechenden Steuereinrichtung in einem Kopiergerät.

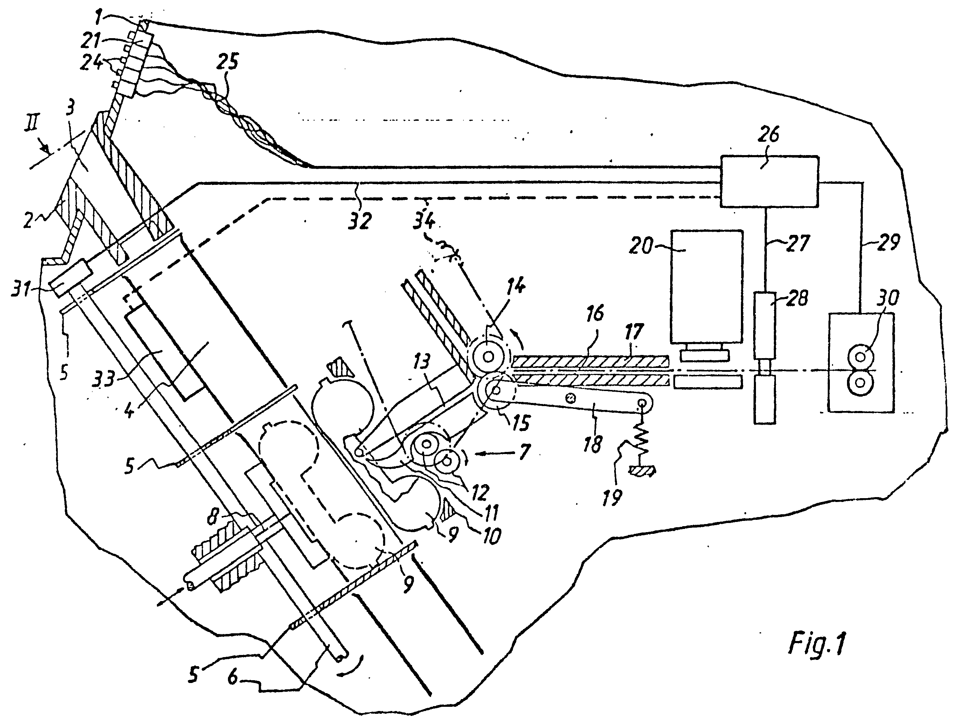

In Fig. 1 ist mit 1 eine Frontplatte eines Gerätes bezeichnet, in welchem Filme aus einer Kassette entnommen und miteinander verbunden werden können. An dieser Frontplatte ist ein Eingabeschacht 2 mit einer Eingabeöffnung 3 eingesetzt, welche schräg nach unten in das Innere des Gerätes führt. An die Eingabeöffnung 3 schließt sich mit etwa gleicher Neigung ein Kassettenfallschacht 4 an, der von Verschlußlamellen 5 verschlossen bzw. unterbrochen wird, welche in einer bestimmten Ordnung auf einer gemeinsamen Drehwelle 6 angebracht sind und im wesentlichen eine Lichtschleuse zwischen Eingabeöffnung 3 und einer Filmentnahmestation 7 bilden. In einem mittleren Bereich ist der Kassettenfallschacht 4 an der nach oben weisenden Längsseite geöffnet und auf der dieser Offnung gegenüberliegenden Unterseite des Fallschachtes 4 ist ein Führungsstempel 8 angeordnet, der die Aufgabe hat, eine Kassette 9 an die Filmentnahmestation 7 zu bewegen.

Die an anderer Stelle beschriebene Filmentnahmestation 7 weist im wesentlichen gerätefeste Anschläge 10, eine Trennzunge 11, ein Transportrollenpaar 12, einen nicht dargestellten Ausstoßer und einen Filmführungskanal 13 auf, welcher vor einem Reibradpaar 14 und 15 endet. Auf der anderen Seite des Reibradpaares 14 und 15 setzt sich eine im wesentlichen waagrechte Filmführung 16 fort, welche den Film 17 zu einer Schneide- und Klebestation 20 lenkt. Das Reibrad 14 ist mit einem Motor verbunden, während das Reibrad 15 an einem Ende eines drehbar gelagerten Hebels 18 angeordnet ist, an dessen anderem Ende eine Zugfeder 19 befestigt ist, die wiederum mit ihrem anderen Ende am Geräterahmen eingehängt ist.

In der Frontplatte 1 ist eine Dateneingabeeinrichtung 21 angeordnet, welche im wesentlichen eine Reihe von Drucktasten 24 aufweist, welche über Leitungen 25 mit einer Speichereinrichtung 26 verbunden sind. Die Speichereinrichtung 26 steht einerseits über eine Leitung 27 mit einer Codiereinrichtung und andererseits über eine Leitung 29 mit einem angetriebenen Transportrollenpaar 30 in Verbindung. Die Codiereinrichtung 28 ist vorzugsweise eine Stanzeinrichtung mit vier anwählbaren Stanzstempeln, welche quer zur Transportrichtung des Filmes 17 angeordnet sind. Die Codiereinrichtung 28 kann aber ebensogut eine optische Einrichtung sein, die vier quer zur Transportrichtung des Filmes angeordnete Leuchtelemente aufweist, die ebenfalls getrennt anwählbar sind. Von dem Transportrollenpaar 30 ist eine Rolle mit einem nicht dargestellten Antrieb verbunden.

Die Wirkungsweise der in Fig. 1 beschriebenen Vorrichtung ist nun folgendermaßen:

Die Bedienungsperson gibt am Bedienungstisch in den Eingabeschacht 3 eine Kassette 9 ein und kann mit der anderen Hand an der Dateneingabeeinrichtung 21 eine Taste 24 drücken, welche der von der Bedienungsperson erkannten Filmsorte entspricht. Gemäß der gewählten Taste 24 wird ein entsprechendes Signal an den Speicher 26 gegeben, in welchem dieses Signal zunächst festgehalten wird. In dem Speicher 26 befindet sich ein Schieberegister, das das gespeicherte Signal bei Eingabe der nächsten Kassette in die nächste Speicherstufe verschiebt. Zu diesem Zweck wird das Schieberegister getaktet und erhält sein Taktsignal über eine Leitung 32 von einem Taktgeber 31, der mit der Drehwelle 6 in Verbindung steht. Damit wird erreicht, daß die Bedienungsperson bei Fehlbedienung der Dateneingabeeinrichtung 21 lediglich eine neue Taste 24 zu drücken braucht, womit der Speichderinhalt geändert ist. Erst wenn die Kassette von der Eingabeöffnung 3 in den Fallschacht 4 gelangt ist, und die obere Verschlußlamelle 5 wieder geschlossen ist, wird das gespeicherte Signal aufgrund des Taktes vom Taktgeber 31 im Schieberegister weitergegeben.

Nach drei Verschiebungen befindet sich das Filmführungsende in der Klebestation 20 und wird dort mit dem Ende des vorangegangenen Filmes mittels eines Klebebandstückes verbunden. Nach der Klebung wird der Filmstreifen mittels des Transportrollenpaares 30 weiter transportiert. Dieser Transport wird aber aufgrund eines Signals über die Leitung 29 unterbrochen, sobald sich das Klebebandstück bzw. das unbelichtete Führungsende des Filmes in der Codiereinrichtung 28 befindet. Dort kurzzeitig gestoppt, wird die Codierung, sei es durch Stanzen oder durch Aufbelichten, vorgenommen. Sobald die Codierung in der Codiereinrichtung 28 beendet ist, wird über die Leitung 27, die Speichereinrichtung 26 und die Leitung 29 ein Signal zum Weitertransport des Filmes an das Transportrollenpaar 30 gegeben.

In einer Ausgestaltung der Erfindung kann statt der manuellen Eingabe der Filmsorten an der Frontplatte auch im Klebegerät eine Leseeinrichtung 33 vorgesehen sein, die sich bei dem Beispiel gemäß Fig. 1 zweckmäßigerweise in der ersten Kammer des Fallschachtes 4 befindet. Bei neueren Kassetten sind bereits an der Kassette den Hersteller kennzeichnende Marken vorgesehen. Diese können von dem Lesegerät 33 abgetastet und über eine Leitung 34 an den Speicher 26 gegeben werden.

Selbstverständlich ist es möglich, die manuelle Eingabe 21 und die automatische Leseeinrichtung 33 nebeneinander in einem Klebegerät vorzusehen.

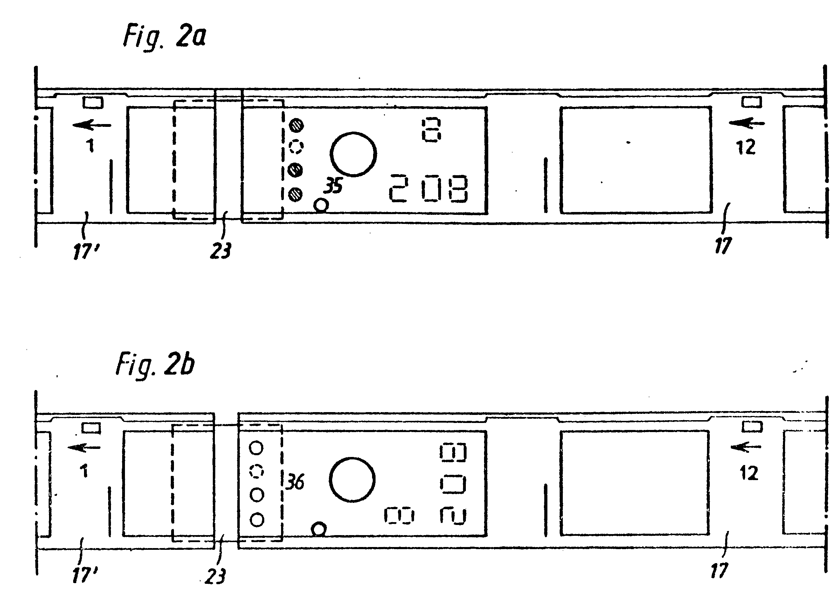

In den Figuren 2a und 2b sind die erwähnten Codiermöglichkeiten dargestellt. In diesen Figuren ist zunächst die Verbindungsstelle zweier Filme 17 und 17' wiedergegeben, wobei mit gestrichelter Linie ein die beiden Filmenden verbindendes Klebebandstück 23 zu sehen ist. In Fig. 2a ist eine aus drei Kreisen bestehende Einbelichtung 35 in das Filmende zu sehen. Es ist ein Vier-Bit-Code gewählt, womit Informationen in ausreichendem Maße auf den Film gegeben werden können. In Fig. 2b ist ein durch das Klebeband 23 gestanzter Code 36 dargestellt. Nachdem das Klebeband 23 undurchlässig für Infrarotstrahlung ist, kann eine solche Codierart auf einfache Weise abgetastet werden.

Selbstverständlich ist auch jede andere Codierung möglich, wie beispielsweise Auskerbungen am Filmrand, aufgebrachte Markierungen oder dergleichen, wenn sie nur mechanisch, fotoelektrisch oder pneumatisch abtastbar sind.

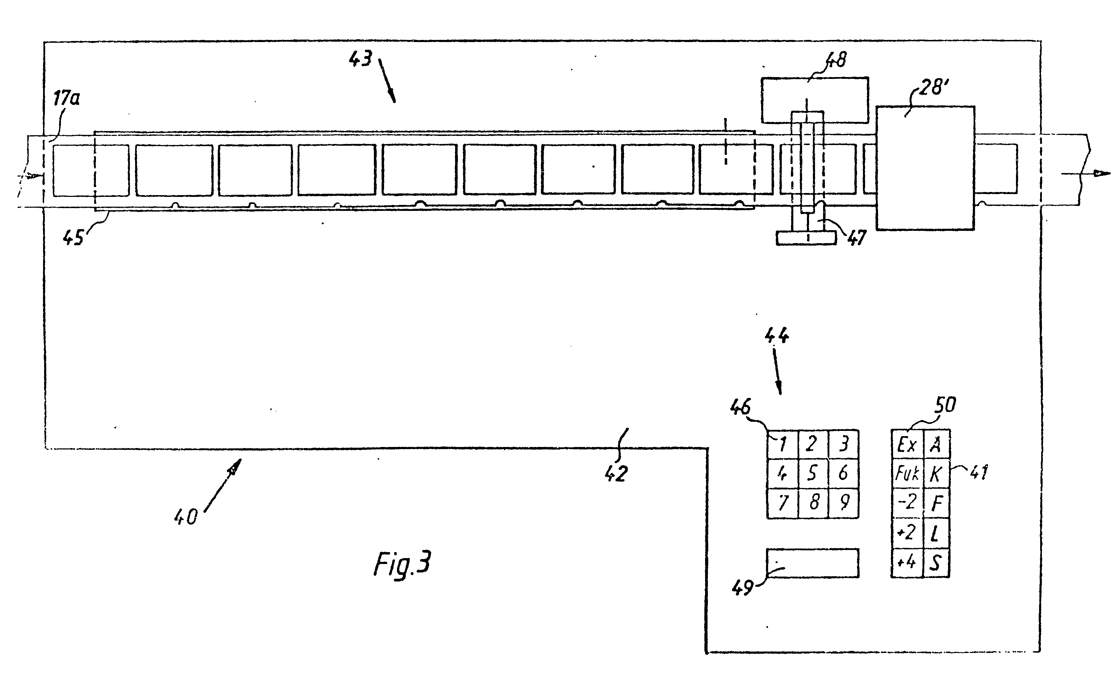

Statt an einem Klebegerät kann das erfindungsgemäße Verfahren auch an einem Gerät zum Beurteilen von Vorlagen angewendet werden, wie dies in Fig. 3 dargestellt ist. Ein sogenannter Prereader 40 weist ein Bedienungspult 42 auf, auf welchem eine Betrachtungsstation 43 und ein Bedienungsfeld 44 vorgesehen ist. Durch die Betrachtungsstation 43 läuft über ein von unten her beleuchtetes Betrachtungsfeld 45 ein Vorlagenstreifen 17a, also die bereits entwickelten Filmstreifen. In Laufrichtung des Vorlagenstreifens 17a gesehen nach dem Betrachtungsfeld 45 ist eine Rolle 47 angeordnet, welche Bestandteil eines Längenmessers 48 ist. Nach dem Längemesser 48 ist die Codiereinrichtung 28' angeordnet, welche bis auf die Einbelichtung die gleichen Codiermöglichkeiten vorsehen kann. Eine im Bedienungsfeld 44 vorgesehene Tastenreihe 41 dient der manuellen Eingabe der jeweiligen Filmsorte. Im Bedienungsfeld 44 sind außerdem die Adressentasten 46, eine Transporttaste 49 under die Korrekturtasten 50 vorgesehen.

Wenn nun ein neuer Teil des Filmstreifens 17a über das Betrachtungsfeld 45 gebracht ist und die Bedienungsperson eine Klebestelle erkennt, kann sie aufgrund der Hersteller- bzw. Sortenbezeichnung am Filmrand die entsprechende Taste im Eingabefeld 41 drücken. Damit wird die Filmsorte in der oben beschriebenen Weise zunächst gespeichert. Sobald nun die Klebestelle in die Codiereinrichtung 28' gelangt, wird jene darin abgetastet, der Filmtransport kurzzeitig unterbrochen und der Film bzw. die Verbindungsstelle aufgrund des gespeicherten Signals markiert. Ohne erneutes Tätigwerden der Bedienungsperson wird der Filmtransport sodann fortgeführt.

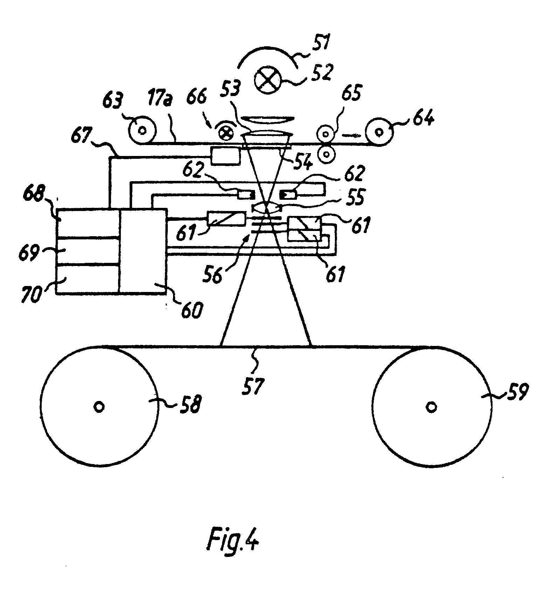

In Fig. 4 ist nun eine schematische Ansicht eines Kopiergerätes wiedergegeben, in welchem die unmittelbar auf dem Film angebrachten Codierungen zur Belichtungssteuerung herangezogen werden sollen. Von dem Kopiergerät sind ein Spiegel 51, eine Lichtquelle 52, ein Kondensor 53, eine Vorlagenbühne 54, ein Objektiv 55, eine Filtereinrichtung 56 und ein Papierband 57 mit Abwickelrolle 58 und Aufwickelrolle 59 dargestellt. Außerdem ist eine Belichtungssteuerung 60 dargestellt, welche mit Betätigungselementen 61 für die Filtereinrichtung 56 in Verbindung steht. In Durchstrahlungsrichtung vor dem Objektiv 55 sind mit der Belichtungssteuerung 60 verbundene Fotoempfänger 62 vorgesehen.

Von einer Abwickelrolle 63 wird die Vorlage 17a durch die Vorlagenbühne 54 zu einer Aufwickelrolle 64 transportiert. Außerdem befindet sich zwischen Vorlagenbühne 54 und Aufwickelrolle 64 ein Transportrollenpaar 65. In Transportrichtung der Vorlage 17a gesehen vor der Vorlagenbühne 54 ist eine Abtaststation 66 angeordnet, welche über eine Leitung 67 mit einer Decodiereinrichtung 68 und einem Eichungs-Umschalter 69 verbunden ist.

Beim Transport der Vorlage 17a durch die Abtasteinrichtung 66 werden die Signierungen in oder an der Verbindungsstelle 23 abgetastet und in die Decodiereinrichtung 68 gegeben, wonach der Eichungs-Umschalter 69 auf die Sorte des folgenden Filmstreifenteiles eingestellt wird. Der Eichungs-Umschalter 69 verändert die Eichung in der Belichtungssteuerung 60, so daß diese die folgenden Belichtungssteuerungen in Anpassung an die neue Sorte durchführt.

Befindet sich die Abtasteinrichtung 66 nicht unmittelbar vor der Negativbühne 54, sondern ein oder zwei Negativbilder davor, so kann nach dem Eichungs-Umschalter 69 noch ein Speicher 70 vorgesehen sein, der die Eichung in der Belichtungssteuerung 60 erst dann ändert, wen die erste Vorlage des nächsten Filmstreifenteiles in die Vorlagenbühne 54 transportiert ist. Selbstverständlich sind in der Belichtungssteuerung 60 die den verschiedenen vorkommenden Filmtypen entsprechenden Einstellungen, wie Eichung, Slope, Unterkorrektur, Selektor u. dgl. bereits gespeichert.

**Patentansprüche**

1. Verfahren zur Berücksichtigung der Eigenheiten der verschiedenen Filmsorten beim Farbkopieren, wobei die Belichtungssteuervorrichtung Speicher umfasst, in denen den Kopiereigenheiten jeder Filmsorte entsprechende Steuerdaten und die Werte eventueller Maskendichten gespeichert sind, wobei für jede Filmsorte auf den zugehörigen Speicher umgeschaltet wird, dadurch gekennzeichnet, daß die Angaben über die jeweilige Filmsorte als maschinell lesbarer Code in den Film eingegeben werden und dieser Code im Kopiergerät gelesen und die Speicherumschaltung entsprechend dem Code automatisch vorgenommen wird.

2. Verfahren nach Anspruch 1, dadurch gekennzeichnet, daß die Eingabe des Codes vor der Filmentwicklung durch Einstanzen an der Klebestelle oder durch Einbelichten in einem nicht bildtragenden Teil des Filmes erfolgt.

3. Verfahren nach Anspruch 1, dadurch gekennzeichnet, daß die Eingabe des Codes durch Einstanzen nach dem Entwickeln und gesteuert durch das Lesen der im Filmrand einbelichteten Sortenbezeichnung erfolgt.

4. Vorrichtung zur Durchführung des Verfahrens nach Anspruch 1 oder 2, dadurch gekennzeichnet, daß in einer Vorrichtung zum Zusammenkleben (20) unentwickelter Filme (17) an der Film- oder Kassetteneingabe (3) eine Dateneingabeeinrichtung (21) vorgesehen ist, die über eine Speichereinrichtung (26) eine vor oder nach der Klebestation (20) angeordnete Codiereinrichtung (28) so steuert, daß der Filmsortencode in den zugehörigen Film (17) einbelichtet oder in die Klebestelle (20) eingestanzt wird.

5. Vorrichtung nach Anspruch 4, dadurch gekennzeichnet, daß in dem Klebegerät eine Leseeinrichtung (33) für einen Code für die Filmsorte an der Filmkassette (9) vorgesehen ist, die die Codiereinrichtung (28) steuert.

6. Vorrichtung zur Durchführung des Verfahrens nach den Ansprüchen 1 und 3, dadurch gekennzeichnet, daß an einem von dem Kopiergerät getrennten Vorbetrachtungsgerät (100) für die Eingabe von Kopierdaten in das Kopiergerät eine Stanzeinrichtung (28') vorgesehen ist, die aufgrund manueller Eingabe (41) einen Code für die Filmsorte in die Klebestellen (23) oder in den Filmrand einstanzt.

**Claims**

1. A method for analysing the properties of different types of film in colour printing, in which the exposure control device comprises memories in which control data corresponding to the printing properties of each type of film and the values at any mask thicknesses are stored, and in which the respective memory is addressed for each type of film, characterised in that the information concerning the respective type of film is supplied to the film as a machine readable code and this code is read in the printing apparatus and the respective memory is addressed automatically in accordance with the code.

2. A method according to Claim 1, characterised in that the code is supplied before the film is

## 0 001 743

developed by imprinting the splice or by making an exposure in a part of the film which is not carrying a picture.

3. A method according to Claim 1, characterised in that the code is supplied by imprinting after development and controlled by reading type indication exposed in the film edge.

4. A device for carrying out the method according to Claim 1 or 2, characterised in that a data input device (21) is provided in a device for sticking together (20) undeveloped films (17) at the film or cassette input (3), the data input device (21) controlling via a memory device (26) a coding device (28) which is arranged before or after the splicing station (20) such that the film type code is recorded by making an exposure on the relevant film (17) or by imprinting the splice (20).

5. A device according to Claim 4, characterised in that a reading device (33) is provided in the splicing device for reading a code for the type of film in the film cassette (9), the reading device (33) controlling the coding device (28).

6. A device for carrying out the method according to Claims 1 and 3, characterised in that a stamping device (28′) is provided at a pre-observation device (100), separated from the printing apparatus, for supplying printing data to the printing apparatus, the stamping device (28′) imprinting a code for the type of film into the splices (23) or into the film edge on the basis of a manual input (41).

**Revendications**

1. Procédé pour tenir compte des particularités des différentes sortes de pellicules lors du tirage en couleurs, le dispositif de commande d'exposition comprenant des mémoirs dans lesquelles sont mémorisées des données de commande correspondant aux particularités de tirage de chaque sorte de pellicule et les valeurs des densités éventuelles de cache, la commutation s'effectuant pour chaque sorte de pellicule à la mémoire correspondante, procédé caractérisé par le fait que l'on introduit dans la pellicule les indications concernant chaque sorte de pellicule, sous forme de code lisible par une machine, qu'on lit ce code dans la tireuse et que la commutation de mémoire s'effectue automatiquement en fonction du code.

2. Procédé selon la revendication 1, caractérisé par le fait que l'introduction du code s'effectue avant le développement de la pellicule, par perforation à l'endroit du collage ou par surexposition dans une partie sans image de la pellicule.

3. Procédé selon la revendication 1, caractérisé par le fait que l'introduction du code s'effectue par perforation après le développement et qu'elle est commandée par la lecture de la désignation de sorte, apposée par surimpression au bord de la pellicule.

4. Appareil pour la mise en oeuvre du procédé selon l'une des revendications 1 et 2, caractérisé par le fait que dans un appareil servant à coller ensemble (20) des pellicules non développées (17) est prévu, à l'endroit d'introduction (3) des pellicules ou des cassettes, un dispositif d'introduction de données (21) qui, par l'intermédiaire d'un dispositif de mémoire (26) commande un dispositif de codage (28) prévu avant ou après le poste de collage (20) de telle sorte que le code se sorte de pellicule est apposé par surimpression sur la pellicule correspondante (17) ou perforé dans le collage (20).

5. Appareil selon la revendication 4, caractérisé par le fait que dans la colleuse est prévu un dispositif de lecture (33) d'un code correspondant à la sorte de pellicule et apposé sur la cassette (9), ce dispositif commandant le dispositif de codage (28).

6. Appareil pour la mise en oeuvre du procédé selon les revendications 1 et 3, caractérisé par le fait que sur une visionneuse (100) séparée de la tireuse est prévu, pour l'introduction de données de tirage dans la tireuse, un dispositif de perforation (28′) qui, en vertu d'une introduction manuelle (41), perfore un code de la sorte de pellicule dans les collages (23) ou au bord de la pellicule.

Fig. 1

0001743

Fig. 2a

Fig. 2b

Fig.3

| 1 | 2 | 3 |
|---|---|---|
| 4 | 5 | 6 |
| 7 | 8 | 9 |

| Ex | A |
|---|---|
| Fuk | K |
| -2 | F |
| +2 | L |
| +4 | S |

Fig.4